(19) Europäisches Patentamt

European Patent Office

Office européen des brevets

(11) **EP 1 020 081 B1**

(12) **FASCICULE DE BREVET EUROPEEN**

(45) Date de publication et mention
de la délivrance du brevet:
**20.03.2002 Bulletin 2002/12**

(51) Int Cl.⁷: **H04N 7/26**, H04N 7/30

(21) Numéro de dépôt: **98946539.8**

(86) Numéro de dépôt international:
**PCT/FR98/02099**

(22) Date de dépôt: **01.10.1998**

(87) Numéro de publication internationale:
**WO 99/18733 (15.04.1999 Gazette 1999/15)**

(54) **PROCEDE DE SYNCHRONISATION SPATIALE D'UNE IMAGE VIDEO CODEE NUMERIQUEMENT ET/OU D'IDENTIFICATION DE LA SYNTAXE D'UNE SEQUENCE VIDEO**

**VERFAHREN ZUR RÄUMLICHEN SYNCHRONISATION EINES DIGITAL CODIERTEN VIDEOBILDES UND/ODER KENNZEICHNUNG DER SYNTAX EINER VIDEOSEQUENZ**

**METHOD FOR SPATIAL SYNCHRONISATION OF A DIGITALLY CODED VIDEO IMAGE AND/OR FOR IDENTIFYING A VIDEO SEQUENCE SYNTAX**

(84) Etats contractants désignés:
**DE ES GB IT NL SE**

(30) Priorité: **06.10.1997 FR 9712415**

(43) Date de publication de la demande:
**19.07.2000 Bulletin 2000/29**

(73) Titulaire: **TELEDIFFUSION DE FRANCE**
**75015 Paris (FR)**

(72) Inventeurs:
• **GOUDEZEUNE, Gabriel**
**F-57070 Metz (FR)**
• **BAINA, Jamal**
**F-54000 Nancy (FR)**

• **BRETILLON, Pierre**
**F-57000 Metz (FR)**

(74) Mandataire: **Jacquard, Philippe Jean-Luc et al**
**CABINET ORES,**
**6, Avenue de Messine**
**75008 Paris (FR)**

(56) Documents cités:
**EP-A- 0 620 685** **WO-A-96/01023**

• **BEAKLEY G ET AL: "VIDEO COMPRESSION: THE NEED FOR TESTING" SMPTE JOURNAL, vol. 104, no. 11, 1 novembre 1995, pages 742-750, XP000540389 cité dans la demande**

**Description**

La présente invention a pour objet un procédé de synchronisation de la position spatiale d'une image vidéo, pour retrouver la position d'une grille initiale de codage numérique initial, par blocs de codage, de ladite image, ainsi qu'un procédé d'identification au moins partielle de la syntaxe temporelle du codage initial.

L'introduction de la technologie du numérique en vidéo, offre de nouvelles perspectives dans les domaines de la production, la post-production, l'archivage et la diffusion des signaux audiovisuels. Par ailleurs, cette technologie a imposé des méthodes de codage à réduction de débit, notamment JPEG, CCITT H261, ISO/CEI 13918 MPEG2, afin de réduire la quantité de données générées et manipulées lors des différentes opérations.

Plusieurs équipements intègrent actuellement de tels algorithmes de codage : magnétoscopes numériques, éditeurs en post-production et encodeurs pour la diffusion. La généralisation de leur utilisation implique souvent une succession de ces opérations. La mise en cascade de ces systèmes n'est pas sans effets sur les signaux en bande de base. En effet, les procédés à réduction de débit sont irréversibles. Par conséquent, ils introduisent des dégradations liées aux algorithmes utilisés : par exemple transformée en cosinus discrète par blocs, estimation et compensation de mouvements, prédiction, etc.... De plus, la mise en cascade de dispositifs numériques et analogiques dans une chaîne de manipulation de signaux audiovisuels introduit de nouvelles dégradations qui s'ajoutent aux dégradations cumulées dues aux codages. Ces dégradations sont principalement dues aux déphasages spatiaux et temporels qui interfèrent avec le formatage des données mis en oeuvre par les méthodes de compression. En effet, les recommandations relatives aux techniques de codage ont spécifié un codage selon lequel l'image est découpée selon une grille de codage présentant des blocs de 8x8 pixels avec une syntaxe de traitement différent pour les images d'une même séquence vidéo : images codées sans prédiction (Intra I), images codées avec Prédiction Monodirectionnelle (P) et images codées avec Prédiction Bidirectionnelle (B).

Il est donc utile de pouvoir disposer d'un procédé permettant de retrouver la synchronisation correspondant à la grille initiale de codage numérique.

En outre, un tel procédé est également utile pour permettre d'effectuer des tests de performance des systèmes.

Afin d'évaluer l'impact d'un système sur le signal original et pour permettre de tester ses performances, il est en effet connu d'effectuer une comparaison entre le signal S en entrée qui est représentatif d'une image source IS, et le signal D présent à la sortie du système, ce signal étant représentatif d'une image dégradée ID. Le calcul du signal erreur est un moyen de diagnostic pour l'évaluation des performances des systèmes analogiques ou numériques. Pour les encodeurs et les décodeurs, par exemple, cette opération souligne l'efficacité de la réduction de débit et met en valeur les dégradations introduites par cette opération. Elle réalise par conséquent la mesure de la qualité du signal en sortie du système.

Cependant, pour réaliser le calcul du signal erreur, il est au préalable souhaitable de resynchroniser les deux signaux de manière à comparer les valeurs des pixels situés aux mêmes positions dans les deux images. Pour la synchronisation de séquences vidéo, l'article de G. BEAKLEY, C. CRESSY et J. Van PELT paru dans le numéro de Novembre 1995 du SMPTE Journal, pages 742 à 750, sous le titre "Video Compression : the need for testing", propose une resynchronisation spatiale. Elle est effectuée par le calcul de la fonction d'intercorrélation entre l'image dégradée ID et l'image source IS. La position du maximum de la fonction donne la valeur entière, en pixels, du déphasage spatial de l'image dégradée par rapport à l'image de référence la plus proche.

L'inconvénient majeur de cette méthode est de nécessiter une image de référence. Cette contrainte peut se révéler onéreuse et difficilement utilisable en pratique, particulièrement dans le cas où les deux versions source IS et dégradée ID de la séquence vidéo sont physiquement éloignées. De plus, l'image de référence, non codée, représente une quantité importante de données à stocker ou à transmettre. Par ailleurs, le temps de calcul nécessaire pour la réalisation de l'opération d'intercorrélation est important et implique une complexité du dispositif.

La présente invention a pour objet de réaliser de manière automatique la synchronisation spatiale (et éventuellement temporelle) des séquences vidéo codées et décodées. Cette opération est exploitable à chaque fois que l'information de position spatiale et/ou temporelle est nécessaire. Comme exemple d'application, elle est utilisable pour réussir toute opération impliquant une succession des procédés précités. Dans ce cas, cette opération évite l'introduction de nouveaux défauts dans les signaux vidéo.

Un autre exemple d'utilisation est une synchronisation spatiale et/ou temporelle pour effectuer une comparaison entre l'image avant codage et l'image décodée. Dans ce second cas, cette synchronisation permet de mettre ensuite en évidence toutes les différences entre les deux images.

Le procédé selon l'invention, tient compte des propriétés spécifiques des techniques mises en application et éventuellement des structures du contenu des images numériques décodées. Pour opérer, le procédé exploite l'information spatiale de phase (au niveau pixel, et modulo la taille du bloc), et/ou l'information temporelle de phase d'une séquence d'images vidéo (la composition des groupes d'image).

Pour cette réalisation, une transformée linéaire par blocs est utilisée, de manière similaire à la transformée en cosinus discrète. TCD, employée dans le standard MPEG. L'invention tire profit des propriétés caractéristiques du traitement de l'image effectué lors du codage MPEG, qui laisse ces caractéristiques sur l'image codée. Cette approche originale permet ainsi de se baser exclusivement sur le traitement du signal vidéo.

Les transformées par blocs linéaires et orthogonales sont utilisables (transformée de Fourier, transformée en cosinus discrète, ...). Pour chacun des blocs d'image $f_{n,m}$ à la position n,m, le bloc transformé $F_{n,m}(i,j)$ correspondant est obtenu par l'opération:

$$[F_{n,m}] = [T].[f_{n,m}].[T]'$$

où T(x,y) est la matrice de la transformation.

La transformée en ondelettes de l'image est également utilisable, en réorganisant les coefficients d'ondelettes de manière à obtenir des blocs transformés de taille souhaitée, notamment de même taille que les blocs obtenus par les méthodes précédentes (transformée en ondelettes discrète DWT). Un mode de réorganisation est indiqué dans l'article de R. de Queiroz et Collaborateurs, intitulé "Wavelet Transforms in a JPEG-Like Image Coder" et publié en Avril 1997 dans la revue IEEE Trans. on Circuits and Systems for Video Technology, Vol. 7, No. 2, p. 419-424.

En particulier, l'utilisation de la Transformée en Cosinus Discrète TCD est très avantageuse de par ses propriétés et son utilisation dans le standard MPEG.

L'idée de base de l'invention est de mettre à profit le fait qu'à la position de codage par une grille initiale de codage numérique par blocs, il existe un fort taux de compaction des coefficients de la transformée par blocs.

L'invention concerne ainsi un procédé de synchronisation de la position spatiale d'une image vidéo pour retrouver la position d'une grille initiale de codage numérique, par blocs de codage, de ladite image, caractérisé en ce qu'il met en oeuvre les étapes suivantes :

a) déplacer selon la direction des lignes de l'image et/ou selon la direction perpendiculaire aux lignes de l'image, une grille d'analyse constituée de dits blocs de codage et correspondant à au moins une partie de l'image ;
b) déterminer à chaque position de la grille d'analyse, les coefficients transformés Fu,v de chaque bloc de la grille d'analyse, par une transformée par blocs, et calculer pour chaque position de la grille d'analyse et à partir des coefficients transformés Fu,v, un paramètre d'activité représentatif de l'activité spatiale de l'image ;
c) déterminer la position de la fenêtre d'analyse pour laquelle ledit paramètre d'activité représente une activité minimale et valider ladite position en tant que position de synchronisation.

Ledit paramètre d'activité peut être la moyenne AM des activités asb des blocs de la grille d'analyse, l'activité asb d'un bloc étant définie comme étant une combinaison éventuellement pondérée, et par exemple la somme, des valeurs absolues des coefficients transformés Fu,v, dudit bloc par une transformée par blocs, par exemple une transformée en cosinus discrète avec $(u,v) \neq (0,0)$.

On peut avoir:

$$asb = \sum_{(u,v) \neq (0,0)} \left| k(u,v).F(u,v) \right|^p$$

k(u,v) est un coefficient de pondération de la composante utilisée, et p une constante.

Selon une variante préférée, le paramètre d'activité est la moyenne ES des entropies spectrales esb des blocs de la grille d'analyse
avec :

$$ES = \overline{esb},$$

$$esb = - \sum_{(u,v) \neq (0,0)} p(u,v) \log_2 \left[ \left( p(u,v) \right) \right],$$

où

$$p(u,v) = \frac{|F(u,v)|}{asb}$$

et

$$asb = \sum_{(u,v)\neq(0,0)} |F(u,v)|$$

F(u,v) désignant les coefficients transformés d'un seul bloc, par une transformée par blocs, par exemple une transformée en cosinus discrète.

La fonction esb qui permet de caractériser la position de synchronisation spatiale peut être calculée à l'aide de la formule suivante :

$$esb = - \sum_{(u,v)\neq(0,0)} k(u,v).p(u,v)\log_2\left[\left(p(u,v)\right)\right]$$

avec

$$asb = \sum_{(u,v)\neq(0,0)} |k(u,v).F(u,v)|^p$$

et

$$p(u,v) = \frac{|F(u,v)|^p}{asb}$$

k(u,v) est un coefficient de pondération de la composante utilisée, et p une constante.

Il y a plusieurs possibilités pour choisir les constantes k(u,v), et le choix de l'un ou l'autre se fait en fonction de l'application recherchée. En effet, la fonction k(u,v) est choisie suivant la caractéristique à mettre en exergue : tenir compte du système visuel ou extraire une partie de l'information pertinente. Les cas suivants sont proposés :

1) le premier procédé est à utiliser lorsque l'on privilégie une bonne corrélation avec la perception humaine. Dans celui-ci, les valeurs des constantes k(u,v) sont initialisées en fonction de l'importance relative des coefficients de la transformée pour l'oeil humain, notamment sa sensibilité fréquentielle, afin de fournir un paramètre d'activité représentatif de ce qui est perçu. Par exemple, dans le cas de la TCD, on prend k(u,v)=1/Q(u,v). Les Q(u,v) sont les composantes de la matrice de quantification exploitée pour la réduction de débit, indiquées dans le document suivant, extrait de la norme MPEG-2 : ISO/IEC CD 13818-2 : "Information technology - Generic coding of moving pictures and associated audio information - Part 2 : video", 1 Dec 1993, p. 45, § 6.3.7.

2) le second procédé est utilisé lorsque les coefficients TCD affectés par la compression sont identifiables. Les constantes k(u,v) sont choisies de manière à éliminer certains coefficients de la transformée utilisée. En effet, la pondération k(u,v) est utilisée pour retenir les coefficients affectés ou sensibles à une dégradation donnée. Il s'agit d'une matrice binaire affectant zéro aux coefficients à éliminer et un aux coefficients pertinents. La sélection se base soit sur la position du coefficient dans la matrice TCD (a), soit sur son amplitude moyenne (b).

a) les coefficients correspondant aux hautes fréquences spatiales sont souvent les plus affectés par la compression. Un exemple de matrice de pondération suivant le rang du coefficient TCD est donné dans le tableau ci-après :

```
        u
    v  0 0 0 0 1 1 1 1
       0 0 0 0 1 1 1 1
       0 0 0 0 1 1 1 1
       0 0 0 0 1 1 1 1
       1 1 1 1 1 1 1 1
       1 1 1 1 1 1 1 1
       1 1 1 1 1 1 1 1
       1 1 1 1 1 1 1 1
```

b) certains coefficients de faible amplitude sont ramenés à zéro lors de l'étape de compression.

Afin de choisir ces coefficients, une moyenne pondérée de chacun des coefficients sur la zone d'image analysée (de taille M.N blocs) est effectuée :

$$moyCoef(u,v) = \sum_{m=1}^{M} \sum_{n=1}^{N} \left| \frac{F_{n,m}(u,v)}{Q(u,v)} \right|,$$

où Q(u,v) est défini comme ci-dessus, en 1)

Les coefficients dont les moyennes sont parmi les 48 plus faibles valeurs sont retenus. Pour ces derniers, k(u,v)=1 et pour les autres k(u,v)=0.

Dans le cas du paramètre "Entropie Spectrale" ES, on fixe k(u,v)=1, et p=1 pour la description des exemples.

Il est avantageux de ne valider ladite position lors de l'étape c, que si la valeur minimale de l'activité que représente le paramètre d'activité est supérieure à un seuil donné A, qui correspond à une "richesse" minimale de l'image qui est requise pour considérer la position de synchronisation comme pertinente.

Ledit déplacement de la grille d'analyse peut s'effectuer par pas égaux à une distance inter-pixels ou à un multiple de celle-ci. Ledit déplacement peut également s'effectuer par pas inférieurs à la distance inter-pixels.

Selon un mode de réalisation préféré, la synchronisation de la position spatiale met en oeuvre un décalage dit sub-pixel, c'est-à-dire un déphasage spatial horizontal inférieur à la distance inter-pixels.

Le procédé selon l'invention est dans ce but caractérisé en ce qu'il comporte, avant l'étape a, une étape de conversion analogique-numérique à l'aide d'un convertisseur présentant une horloge d'échantillonnage pour échantillonner des signaux d'images, et en ce qu'il comporte, après l'étape c :

- une étape d de décalage dX de la grille d'analyse dans le sens des lignes de l'image, en modifiant d'au moins un incrément dφ la phase d'échantillonnage des signaux d'image ;
- une étape e de détermination, pour au moins une position décalée dX de la grille d'analyse, définie lors de l'étape d, desdits coefficients transformés Fu,v et dudit paramètre représentatif de l'activité de l'image.

Le procédé peut être alors caractérisé en ce que, lors de l'étape d, on réalise une scrutation dite sub-pixel en décalant la grille d'analyse selon une pluralité de dites positions décalées de la grille d'analyse obtenues en modifiant par incréments dφ la phase d'échantillonnage, en ce que, lors de l'étape e, on détermine, pour chacune des positions décalées, lesdits coefficients transformés Fu,v et ledit paramètre représentatif de l'activité de l'image, et en ce qu'il comporte une étape f de détermination de la position dite sub-pixel $(d\varphi_o, dX_o)$ de la grille d'analyse pour laquelle ledit paramètre d'activité représente une valeur minimale.

Le procédé peut comporter, après l'étape e, une étape g de détermination dudit paramètre d'activité selon deux dites positions décalées, dont l'une est une position dite avancée (dX+Δ) et l'autre est une position dite retardée (dX-Δ).

Cette étape g peut être avantageusement suivie d'une étape h de détermination pour chacune des positions, avancée ((dX+Δ) et retardée (dX-Δ), de la moyenne du paramètre d'activité sur M images.

Selon une variante préférée, le procédé met en oeuvre une contre-réaction sur la phase φ de ladite horloge d'échantillonnage. Ce pilotage peut être effectué à partir d'un signal d'erreur qui est la différence entre ladite moyenne du paramètre d'activité pour la position retardée (dX-Δ) et ladite moyenne du paramètre d'activité pour la position avancée (dX+Δ).

Le paramètre d'activité est de préférence l'entropie spectrale ES, et ledit signal d'erreur est de préférence normalisé par l'entropie spectrale moyenne $\bar{E}S$ d'au moins une zone de l'image.

Le procédé selon l'invention permet alors d'identifier les images du type codées sans prédiction (I) en déterminant dans une séquence d'images synchronisées spatialement, les images qui présentent la valeur la plus faible de l'activité représentée par un paramètre d'activité, ces images étant de ce fait identifiées comme étant de type codé sans prédiction, c'est-à-dire du type I.

Le procédé peut également permettre d'identifier les images du type codées avec prédiction (P) en déterminant dans une séquence d'images, les images présentant la valeur la plus élevée de l'activité représentée par un paramètre d'activité, lequel est de préférence l'activité moyenne AM d'au moins une zone des images de ladite séquence.

Ce paramètre d'activité peut être déterminé sur la totalité de l'image ou sur une zone d'intérêt de celle-ci.

Avantageusement, une dite détermination s'effectue après filtrage passe-haut du signal représentatif du paramètre d'activité des images de ladite séquence d'image, de manière à éliminer au moins partiellement l'évolution du contenu des images à l'intérieur de la séquence.

Ledit filtrage passe-haut consiste avantageusement à calculer chaque point du signal filtré par calcul du plus petit écart positif entre un point correspondant à l'image courante du signal non filtré et les points voisins correspondant à l'image précédente et à l'image suivante.

D'autres caractéristiques et avantages de l'invention apparaîtront mieux à la lecture de la description qui va suivre, en liaison avec les dessins ci-annexés, dans lesquels :

- la figure 1 illustre le procédé mis en oeuvre selon la présente invention ;
- la figure 2 représente un exemple de structure de groupe d'images GOP ;
- la figure 3 est un exemple illustrant la variation du paramètre d'entropie spectrale ES en fonction du déphasage spatial de la grille d'analyse GA, pour une image I d'une séquence codée à 4Mbits/seconde ;
- la figure 4 illustre un exemple de variation temporelle du paramètre d'entropie spectrale ES sur une séquence GOP pour une scrutation selon la direction horizontale X en supposant connue la synchronisation verticale Y ;
- la figure 5 est un exemple de mise en oeuvre de l'invention appliquée à un signal analogique ;
- la figure 6 illustre différentes possibilités de numérisation d'une portion de ligne d'un signal analogique selon deux instants d'échantillonage $t_1$ et $t_2$ décalés en phase de $d\varphi$ ;
- la figure 7 illustre une recherche de la position correspondant au minimum du paramètre ES ;
- les figures 8a et 8b illustrent l'obtention d'un signal d'erreur de phase ;
- les figures 9a, 9b et 9c illustrent respectivement l'évolution de ES sur 250 images d'une séquence cochée à 4Mbits/seconde après synchronisation spatiale (9a), l'extraction des minima locaux de ES après filtrage passe-haut (9b), et enfin le résultat de la détection des images I(9c) ;
- et les figures 10a à 10c illustrent respectivement le signal AM d'extraction des pics du paramètre d'activité AM sur 12 images d'une séquence GOP codée à 4Mbits/seconde (10a), le signal AM filtré par filtrage passe-haut (10b), et le résultat de la détection des images P (10c).

L'invention telle que décrite ci-après met en oeuvre la connaissance du procédé de codage de séquences d'images par une norme, par exemple MPEG2. En effet, les particularités de cette technique offrent des possibilités avantageuses pour le traitement du signal vidéo codé. Une description succincte des éléments algorithmiques implantés dans MPEG est utile à la compréhension du principe de l'invention, mais on remarquera que l'invention s'applique également aux autres codages numériques.

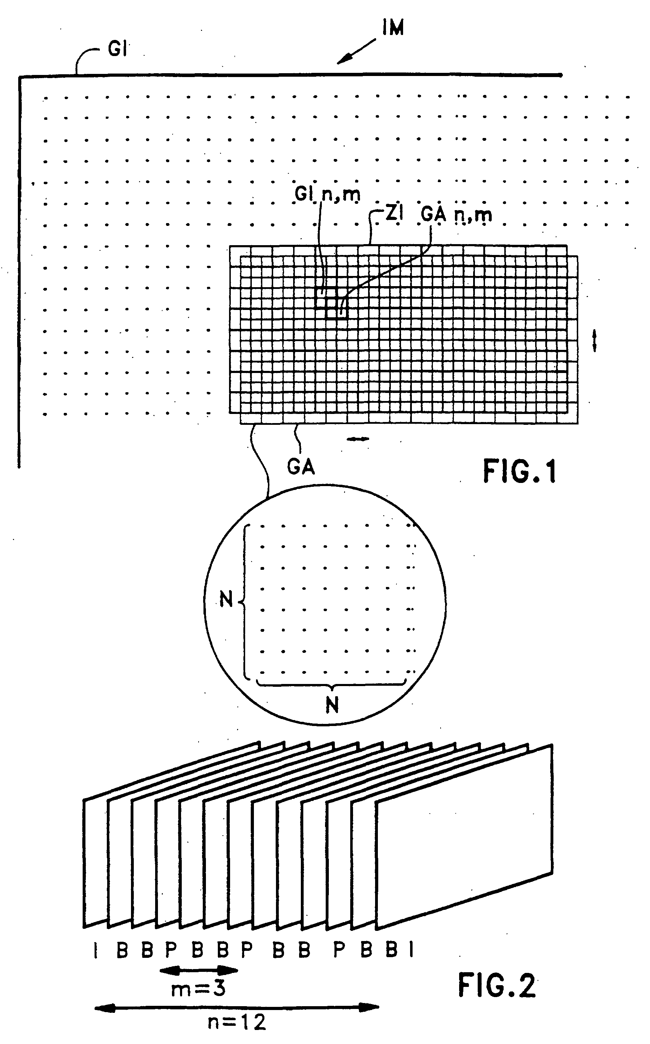

Pour effectuer la réduction de la quantité d'information contenue dans des images IM, le codage par exemple MPEG1, MPEG2, ou ISO H261 ou bien JPEG (pour la synchronisation spatiale) repose sur certains outils algorithmiques. Pour le codage des valeurs des points image ou pixels, de l'image, les algorithmes précités tirent parti de la ressemblance entre des pixels voisins sur une même image (redondance spatiale) et entre des images voisines (redondance temporelle). La transformée en cosinus discrète (TCD), par blocs de 8x8 pixels, est appliquée pour réduire la redondance spatiale. L'image est donc, au préalable, découpée en blocs. La réduction d'information est faite en arrondissant les valeurs des coefficients TCD obtenus (quantification scalaire). La transformée en cosinus par blocs de NxN pixels (par exemple N=8) change la base de représentation de l'image. Cette transformation est effectuée à partir d'une grille initiale GI présentant des blocs de NxN pixels et dont les bords sont les bords de l'image initiale codée IM (voir figure 1). Pour réduire la redondance temporelle, un codage prédictif est utilisé. Il opère une estimation des échantillons à coder par une prédiction obtenue en fonction des valeurs précédentes du signal. L'erreur de prédiction est codée, et elle offre une réduction forte de l'information à représenter. La prédiction est réalisée sur les images antécédentes dans l'axe des temps. L'image "erreur" obtenue est par la suite codée par la transformée TCD. Au décodage, les images sont reconstituées à partir des images de prédiction et des données codées.

La régulation qui permet d'obtenir un débit constant en sortie de l'encodeur impose l'utilisation d'une régularité dans l'application des différents algorithmes temporels. En effet, la norme MPEG2 spécifie une syntaxe de codage prédictif appliquée aux séquences d'images. Chaque image est codée suivant un type particulier de prédiction : I, P et B.

- les images I (intra) sont codées par TCD sans prédiction et donc sans tenir compte de leur passé. Elles sont considérées comme des images fixes et isolées.
- les images P sont obtenues par codage prédictif à partir de l'image I ou P qui la précède.
- les images B (bi-directionnelles) spécifiques à MPEG-2 sont obtenues à partir des deux images I ou P les plus proches, par interpolation.

Un groupe d'images ou GOP est une structure qui se répète dans le temps et représente la séquence vidéo. Il est composé d'un nombre d'images n égal à la distance entre deux images "I" et dans lequel les images "P" ont une périodicité m. Ces paramètres caractérisent entièrement la structure du GOP (voir figure 2). Dans l'exemple représenté, n=12 et m=3.

La TCD est largement utilisée pour le codage d'images. Le procédé décrit ci-après se propose à titre d'exemple de l'appliquer pour analyser des séquences codées et décodées en vue de réaliser toutes les opérations de synchronisation. Cette approche avantageuse démontre une grande efficacité de robustesse.

Un premier objet de l'invention est la synchronisation spatiale de l'image sur la position de la grille de codage initiale GI. En effet, pour des besoins de re-cadrage, une opération d'identification de la position est réalisée. Pour ceci, des indicateurs obtenus à partir de la transformée en cosinus sont utilisés.

Lors du codage, les tables de quantification scalaire des coefficients TCD amènent à concentrer l'énergie du bloc analysé sur un nombre limité de coefficients représentatifs. Les autres sont arrondis à une valeur nulle. Cette opération reste le noyau même de la réduction de débit.

Sur une image numérique codée et décodée, cette propriété reste valable. En effet on constate que, si une scrutation au niveau des blocs est effectuée, la position correspondant à la grille initiale de codage GI présente une concentration d'énergie particulière. Par conséquent, cette propriété constitue l'idée de base qui est mise en oeuvre pour identifier la position de la grille initiale de codage. Parmi les transformées possibles, la transformée TCD est avantageuse car elle est utilisée dans le standard MPEG. D'autres transformées par blocs sont utilisables (par exemple transformée de Fourier, transformée en ondelettes DWT) et il n'est pas nécessaire que la transformée utilisée soit la même que celle selon laquelle l'image initiale a été codée.

La propriété de base utilisée pour se resynchroniser spatialement est la concentration de l'énergie des coefficients par exemple TCD autour de la composante continue de chaque bloc d'image.

Afin de réaliser cette fonction de synchronisation, un indicateur spatial a été testé avantageusement.

La propriété considérée est plus sélective pour les images "I" que pour les autres typés d'images. L'activité d'un bloc est définie par exemple par l'équation suivante :

$$asb = \sum_{(u,v)=(0,0)} |F(u,v)|$$

F(u,v) désignant les coefficients transformés du bloc auquel est appliquée la transformée en cosinus discrète TCD.

L'équation suivante définit l'activité moyenne de l'image ou d'une zone d'intérêt ZI de celle-ci, par la moyenne des activités blocs

$$AM = \bar{a}sb$$

Une des propriétés des transformées par blocs, et en particulier de la TCD est leur capacité à compacter l'information de l'image dans un petit nombre de coefficients. Le paramètre AM indique la quantité moyenne d'information dans le domaine TCD qui est contenu dans les blocs analysés. Ce paramètre est calculé pour une position donnée de la grille GA des blocs qui peut recouvrir la totalité de l'image, ou bien seulement la zone d'intérêt ZI.

Bien qu'efficace, le paramètre asb ne donne aucune information sur la répartition de l'énergie dans les coefficients de TCD, et en outre, asb est sensible à l'amplitude des coefficients TCD.

On utilisera donc de préférence l'entropie spectrale esb d'un bloc définie par exemple de la manière suivante :

$$esb = -\sum_{(u,v)\neq(0,0)} p(u,v)\log_2\left[\left(p(u,v)\right)\right],$$

où

$$p(u,v) = \frac{|F(u,v)|}{asb}$$

L'entropie spectrale ES de l'image (ou d'une fenêtre d'analyse ZI), est donnée par la moyenne des entropies spectrales esb des blocs de la grille d'analyse GA dans la fenêtre d'analyse ZI ou pour la totalité de l'image.

$$ES = \bar{e}sb.$$

A la position initiale de la grille GI des blocs, c'est-à-dire à la position de leur codage, une certaine quantité d'information a été négligée et écartée par le codeur. Cette action lui permet de réduire l'information pertinente à coder. Par ailleurs, le codage des différents blocs est effectué indépendamment de leurs voisins sur la même image.

Selon l'invention, on met en oeuvre une grille d'analyse GA présentant des blocs de NxN pixels et que l'on déplace pour réaliser une scrutation horizontale et/ou verticale de la totalité de l'image ou de la fenêtre d'analyse ou zone d'intérêt ZI.

Lorsque la grille d'analyse GA est disposée à une position correspondant au codage initial, les paramètres AM et surtout le paramètre ES présentent un fort taux de compaction pour les coefficients TCD.

Par contre, lorsque l'activité moyenne AM ou l'entropie spectrale ES est calculée pour une grille d'analyse GA prise à une position différente de celle de la grille initiale GI (voir figure 1), elle présente une information supplémentaire. Cette information tient compte de toutes les discontinuités et des différences de contenu entre les blocs adjacents, c'est-à-dire de l'effet de bloc qui est dû au codage indépendant des différents blocs d'une même image.

En tout cas, elle ne devrait aucunement présenter une quelconque concentration d'énergie telle qu'il est constaté dans le cas où la position de la grille d'analyse GA est cohérente avec le codage initial.

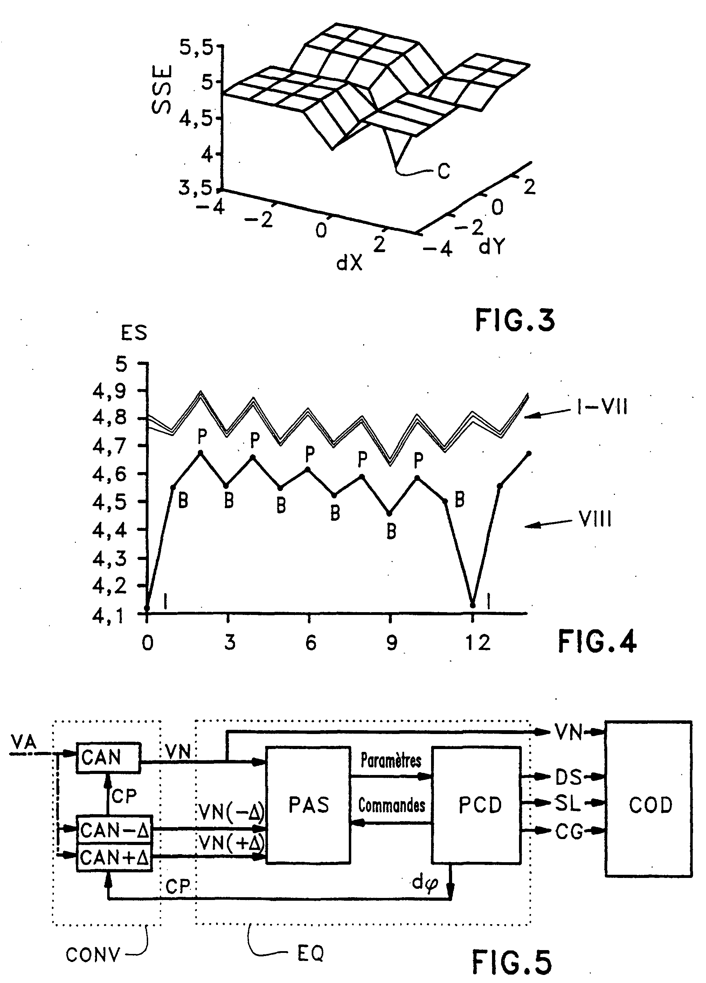

La position cohérente ou initiale des blocs de codage n'est pas connue à priori. La scrutation de toutes les positions avec des décalages horizontaux et/ou verticaux de (dX, dY) pixels est réalisée à l'aide d'une grille d'analyse GA. Elle amène à considérer qu'il existe une valeur minimale du paramètre AM ou ES à la position recherchée (cohérente). Un exemple d'une telle scrutation est représenté à la figure 3.

Le point C correspond au minimum de ES parmi toutes les positions de scrutation de la grille GA pour une même image.

La valeur minimale de ES (point C) à la position de codage, est ici représentée par un décalage nul (dX,dY) = (0,0).

Le paramètre AM ou ES calculé est donc un indicateur de la dispersion moyenne des coefficients F de la transformée TCD des blocs. A la position de codage des blocs (point C de la figure 3), une valeur de dispersion présentant un minimum relatif par rapport aux autres positions de scrutation est obtenue.

Un minimum peut être obtenu par scrutation en déplaçant la grille d'analyse GA uniquement dans la direction horizontale, pour obtenir une synchronisation horizontale ou par scrutation en déplaçant la grille d'analyse GA uniquement dans la direction verticale pour obtenir une synchronisation verticale, mais on réalise de préférence une scrutation selon les deux directions, horizontale X et verticale Y, la valeur minimale de AM ou ES donnant la position de synchronisation correspondant à la position de la grille initiale.

La grille d'analyse GA peut recouvrir la totalité de l'image, mais elle peut se limiter à une région seulement de l'image constituant une zone d'intérêt ZI comme représenté à la figure 2.

Dans le cas où la grille d'analyse GA intéresse la totalité de l'image, sa dimension reste toutefois légèrement inférieure à celle de l'image à analyser de manière à ce que la grille d'analyse GA ne déborde pas de l'image lors de la scrutation. On utlise par exemple une grille d'analyse GA dont la dimension est inférieure de N pixels à celle de l'image, à la fois dans le sens horizontal et/ou dans le sens vertical, selon que la scrutation doit être opérée selon une direction ou selon ces deux directions.

Ce critère est utilisé selon l'invention pour la synchronisation spatiale. Toutefois, il est important de remarquer que l'utilisation de cette approche n'est possible que si l'image a un contenu suffisamment riche. Une condition préalable est définie à partir de l'indicateur de la richesse ou activité moyenne AM du contenu d'une image. En effet, une valeur minimale est requise à la position de synchronisation spatiale, à savoir AM > $AM_o$. Le seuil $AM_o$ est déterminé de

manière à éliminer les images de faible activité sur toute leur surface ou dans la zone ZI.

Pour les images "I" codées sans référence temporelle, le paramètre AM ou ES présente une valeur minimale lorsqu'il est calculé à la position de codage des blocs. Sur les images "P" ou "B", la même propriété est vérifiée même si la réponse obtenue est toutefois moins nette.

Cette propriété est mise en évidence sur l'exemple représenté à la figure 4, obtenu à partir d'une séquence de 12 images codée à 5Mbits/seconde. Pour les besoins de la représentation, la synchronisation verticale est supposée être connue et seule la synchronisation horizontale est supposée inconnue. Les courbes du haut I à VII représentent les résultats obtenus pour les sept positions de scrutation horizontale qui ne correspondent pas à la position initiale. La courbe VIII correspond à la position de synchronisation sur la grille d'analyse GA, c'est-à-dire sur la position de codage initial. Ces courbes montrent que, sur une image donnée, le paramètre ES a toujours une valeur inférieure lorsqu'il est calculé à la position de codage initial. On reconnaît sur la courbe VIII les images "I", pour lesquelles l'écart entre la position cohérente et une autre position est relativement plus important que pour les autres images. Dans ce cas, on peut également voir que le groupe d'images GOP est composé de n=12 images, puisque c'est le nombre d'images qui sépare deux images de type I. On reconnaît également les images de type P, qui présentent des maxima du paramètre ES. Les autres images sont de type B.

La recherche de la phase spatiale d'une image de la séquence vidéo, consiste donc à calculer le paramètre AM ou de préférence ES. Ce calcul est effectué à chacune des NxN, soit 8x8 positions possibles de la grille de codage (voir encadré de la figure 1). Le décalage spatial des blocs de codage par rapport à une grille d'origine dont les bords correspondent à ceux de l'image d'origine est donné par la position de la valeur minimale du paramètre AM ou ES, Ce calcul peut être invalidé si la valeur de AM à la position de codage trouvée est inférieure à un seuil $AM_o$, ce qui correspondant à un contenu trop pauvre pour pouvoir faire toute analyse fiable.

Cette limite du procédé n'est pas fondamentalement gênante. Prenons l'exemple de l'application à une cascade de codages-décodages. En effet, pour des images pauvres en termes de contenu, même si elles ne sont pas synchronisées spatialement, l'encodeur n'aura pas de difficultés à les coder. Par conséquent, la mise en cascade de codeurs-décodeurs n'altère que les images riches en contenu. Pour ces dernières, la synchronisation s'impose et la méthode proposée est efficace et robuste.

La procédure de synchronisation spatiale sur une image peut être effectuée de la manière suivante:

    a) acquérir l'image,
    b) déterminer les valeurs de ES à toutes les positions possibles de la grille d'analyse GA,
    c) déterminer le déphasage spatial qui est donné par la position de la valeur minimale de ES,
    d) tester la validité de la mesure pour vérifier si le contenu de l'image est suffisamment riche :

    **.**   si $AM > AM_o$, alors la synchronisation est réalisée,
    **.**   sinon retour à a).

Le procédé décrit au paragraphe précédent correspond au cas d'images numériques. Cependant, l'utilisation de signaux analogiques est encore fréquente en pratique. Le procédé peut être adapté au cas des images analogiques ayant précédemment été soumises à un codage numérique.

Dans le cas où les images pour lesquelles une synchronisation spatiale est recherchée sont sous la forme d'un signal analogique, le décalage spatial peut en effet avoir une valeur qui n'est pas égale à un nombre entier d'intervalles inter-pixel (ou pas des pixels) dans la direction horizontale. Ce décalage peut éventuellement avoir été introduit au niveau du Convertisseur Analogique-Numérique. Le procédé exposé plus haut permet bien de détecter le déphasage horizontal, mais il effectue un arrondi à un nombre entier de pixels en raison de la discrétisation de l'image.

Il est dans ce cas possible, selon l'invention, de corriger la partie fractionnaire (ou sub-pixel) de la valeur du déphasage spatial horizontal (c'est-à-dire dans le sens des lignes de l'image). Le procédé permet alors de réaliser une synchronisation spatiale à une fraction de pixel près. Cette étape est en général postérieure à une synchronisation spatiale effectuée au pixel près par le procédé exposé plus haut, mais il est également possible d'obtenir une synchronisation horizontale sub-pixel uniquement à l'aide du procédé décrit ci-après, illustré par la figure 5.

Dans celle-ci, la phase de l'horloge H de numérisation du Convertisseur Analogique-Numérique CAN chargé d'acquérir le signal vidéo analogique d'entrée VA, est pilotée par le signal CP généré par l'équipement numérique de synchronisation EQ. Cet asservissement exploite l'indicateur ES d' Entropie Spectrale.

L'équipement EQ reçoit à son entrée le signal vidéo numérique VN numérisé par le convertisseur CAN, et il produit en sortie, un signal DS de déphasage spatial (X,Y), un signal CG de composition de groupe d'images GOP et un signal logique SL de présence ou d'absence d'une image I, foumis à un codeur COD.

Un processeur PAS de calcul du paramètre d'activité est mis en oeuvre pour calculer le paramètre AM ou ES en fonction de VN et éventuellement de signaux décalés VN(-$\Delta$) et VN(+$\Delta$) ainsi qu'il sera explicité plus loin. Le processeur PCD de commande et de décision analyse les résultats produits par le processeur PAS et effectue la recherche de la valeur DS de synchronisation spatiale, la commande CP de la phase d'asservissement du convertisseur CAN et l'analyse syntaxique MPEG-2 de la séquence et la détection des images "I".

Ladite opération de calage de phase peut être faite ponctuellement, par exemple une seule fois à l'initialisation de l'équipement. Elle peut également faire partie d'une procédure d'adaptation à la chaîne analogique à chaque fois qu'il est nécessaire de réajuster le système à de nouvelles conditions. Elle peut également être menée sur une séquence vidéo continue.

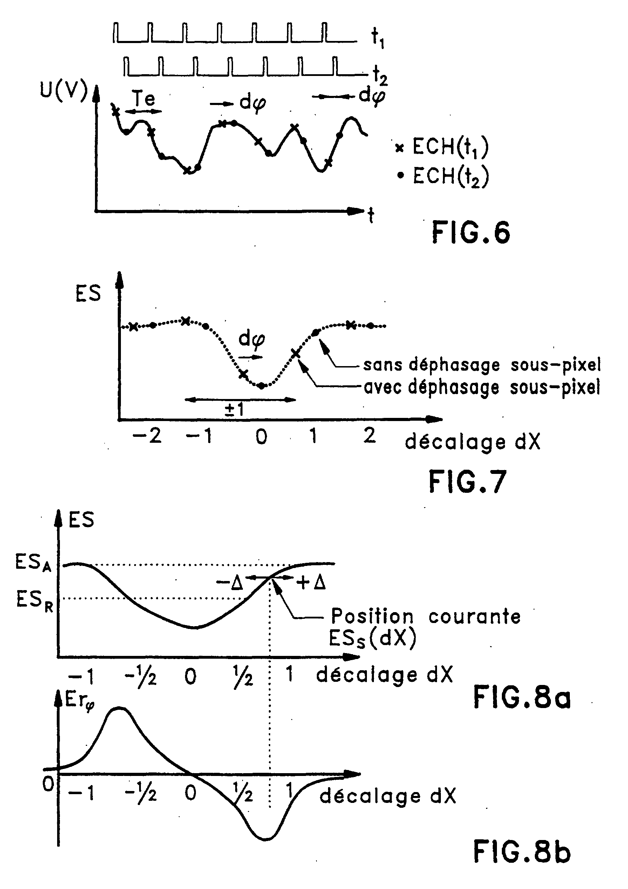

Le principe de ce procédé est une extension du précédent au domaine continu (ou analogique), par opposition au domaine discrétisé. Reprenons-le dans le cas d'une image numérique : la scrutation de toutes les positions possibles de la grille d'analyse GA des blocs ne peut se faire que sur des valeurs entières de pixels en raison de la discrétisation de l'image. La scrutation des positions sub-pixel est donc réalisée ici par une petite modification $d\varphi$ de la phase de l'échantillonnage et en particulier de la phase de l'horloge d'échantillonnage du convertisseur analogique-numérique CAN. Cette modification $d\varphi$ introduit un décalage inférieur à la période d'échantillonnage Te qui correspond à un décalage de 1 pixel. La figure 6 illustre le cas de deux échantillonnages $ECH(t_1)$ et $ECH(t_2)$ réalisés à des instants $t_1$ et $t_2$ décalés de manière à correspondre à un déphasage $d\varphi$. La commande de phase se réalise par exemple en commandant en phase l'oscillateur à commande numérique (O.C.N.) qui génère l'horloge H d'échantillonnage. Par la suite, l'acquisition d'une nouvelle image numérique est effectuée pour chaque nouvelle position de scrutation.

La phase de numérisation optimale est donnée comme précédemment par le critère du minimum de AM ou de ES sur une plage de scrutation donnée en commandant le déplacement de la grille d'analyse GA par variation de la phase $d\varphi$. Le graphique de la figure 7 montre l'allure de la fonction continue ES(DX) et les valeurs qui sont accessibles avec le procédé de synchronisation spatiale par un nombre entier de pixels. On voit d'une part que l'introduction d'un déphasage de numérisation permet de choisir de nouvelles positions pour calculer des valeurs de ES. Une variation très fine de $d\varphi$ sur un intervalle de temps Te correspondant à un décalage d'un pixel offre la possibilité de couvrir de manière précise la fonction ES(dX) (voir figure 7).

Le procédé de correction de décalage sub-pixel comporte de préférence deux étapes. La première étape consiste à rechercher par valeurs entières la position la plus proche du minimum de AM ou de ES. La seconde étape est itérative et consiste à acquérir des images légèrement déphasées $d\varphi$, variant sur une plage de $\pm$ Te (soit $\pm$ 1 pixel) et à calculer le paramètre AM ou ES à la position trouvée à la première étape, mais qui se trouve décalée de $d\varphi$

$$d\varphi = 1/N.Te$$

N définit la finesse de la scrutation et la précision avec laquelle sera obtenue la position optimale. Pour chaque incrément de la phase, AM ou ES est calculé. Le déphasage $d\varphi$ optimal de l'horloge de numérisation, c'est-à-dire celui qui est à maintenir correspond au minimum de la fonction AM ou ES.

Cependant, il existe en toute rigueur une condition de réalisation pour la synchronisation spatiale. En effet, à chaque valeur de la phase, une acquisition est effectuée. Il serait donc préférable d'utiliser un signal vidéo représentant une image fixe à la sortie du convertisseur analogique numérique, par exemple une image mémorisée. De cette manière, la même acquisition est faite, et par la suite les traitements sont réalisés sur une même image.

Le procédé peut être mis en oeuvre avec des images variables, comme illustré aux figures 8a et 8b.

En effet, à partir de la position courante du décalage de phase $d\varphi$, correspondant à un écart de dX intervalles inter-pixels et ayant une valeur d'entropie ES(dX), deux mesures d'entropies sur des positions volontairement décalées sont effectuées, l'une dite position avance, soit :

$$ES_a(dX) = ES(dX+\Delta)$$

l'autre dite position retard, soit :

$$ES_r(dX) = ES(dX-\Delta)$$

ces mesures étant des moyennes de la valeur du paramètre ES sur plusieurs images, et $\Delta$ étant inférieur au pas des points images ou pixels dans la direction des lignes de l'image.

Le calcul d'une fonction erreur est effectué à partir de ces mesures :

$$ES_\varphi(dX) = ES_r(dX) - ES_a(dX).$$

Cette erreur pilote une contre-réaction sur la phase de l'horloge d'échantillonnage. Elle est représentée sur les figures.

Le cas échéant, cette erreur est normalisée pour chaque image, par exemple par l'entropie spectrale moyenne ES de l'image ou de la zone ZI pour la rendre plus indépendante du contenu de l'image.

Plusieurs mesures successives sont effectuées à la même position du décalage de phase $d\varphi$, et sont ensuite filtrées passe-bas avant de fournir la commande d'asservissement de l'oscillateur à commande numérique OCN générant l'horloge d'échantillonnage. Cette commande est bien sûr appliquée en synchronisme avec l'acquisition des images.

En ce qui concerne la mise en oeuvre pratique de cette variante, les mesures des paramètres spectraux avance et retard peuvent être réalisées :

- soit en parallèle, ce qui nécessite trois chaînes d'acquisition (une pour la voie dite synchrone qui alimente le codeur vidéo, deux pour les mesures avance et retard de AM ou ES),
- soit séquentiellement, ce qui réduit le besoin à deux chaînes d'acquisition. Ce besoin est limité à une seule chaîne si une initialisation est permise (convergence de l'asservissement). Dans le cas séquentiel, l'alternance des mesures avance et retard sur des images successives doit être synchrone du rythme d'acquisition des images.

De plus, le pas du décalage $\Delta$ est adaptable au besoin :

$\Delta = 1$ pixel : $ES_r(dX)$ et $ES_a(dX)$ sont directement disponibles lors de l'étape de calcul réalisant la synchronisation au pixel près.

$\Delta < \varepsilon$ : si $\varepsilon$ est choisi suffisamment faible pour ne pas perturber le codeur vidéo, ce codeur peut être alimenté par une voie d'acquisition unique alternativement décalée en avance ou en retard de phase pour réaliser les mesures des paramètres d'activité spectrale ou d'entropie spectrale $ES_r(dX)$ et $ES_a(dX)$.

L'invention offre ainsi un moyen de resynchronisation spatiale fine à (1/N pixel) près correspondant à la résolution en phase de l'oscillateur à commande numérique OCN générant l'horloge d'échantillonnage.

Cette opération est réalisée par asservissement de la phase de l'horloge de numérisation du convertisseur analogique-numérique à partir du calcul par exemple d'entropies spectrales de l'image en sortie du système vidéo, par exemple selon la procédure séquentielle suivante :

a) numériser une image,

b) rechercher le déphasage horizontal arrondi à un nombre de pixels entiers (procédure de synchronisation spatiale),

c) introduire alternativement, avec un rythme correspondant à un nombre entier d'images, un déphasage horizontal de $\pm\Delta$ sur le convertisseur analogique numérique CAN et réaliser en synchronisme les mesures $Es_r(dX)$ et $ES_a$ (dX) après numérisation des images correspondantes,

d) calculer la fonction erreur et la filtrer par filtrage passe-bas avec les mesures précédentes,

e) appliquer la contre-réaction sur l'horloge du convertisseur analogique-numérique CAN. Itérer la procédure sur c).

Dans le cas de mise en cascade de deux codeurs, nous avons souligné l'importance d'une synchronisation spatiale des pixels à coder. En effet, cette opération s'impose afin de tirer parti d'une manière optimale des techniques de compression en tenant compte de la qualité finale des images. D'autre part, nous avons décrit la syntaxe recommandée par la famille des codages MPEG pour le codage des séquences d'images (I, P et B). En tenant compte de cette syntaxe, on peut également optimiser l'utilisation des méthodes de compression. En effet, puisque cette syntaxe agit sur le nombre de bits alloués par image ainsi que sur sa qualité, son respect est avantageux, voire essentiel pour une mise en cascade.

Selon l'invention, il est possible de réaliser une identification de la syntaxe temporelle du codage initial. Ceci passe par la reconnaissance des images, I, P et B. La synchronisation temporelle, présentée ici, a pour objet de repérer quelles sont les images I, P et B. Cette opération n'est effectuée qu'après avoir réalisé la synchronisation spatiale. Le procédé global peut donc se résumer par :

a) acquisition d'une image,

b) recherche de la position de codage spatial,

c) recherche si cette image est de type "I",

d) si cette image est de type "I",

alors analyser le contenu du groupe d'images GOP précédent et identifier les images "P" et "B".

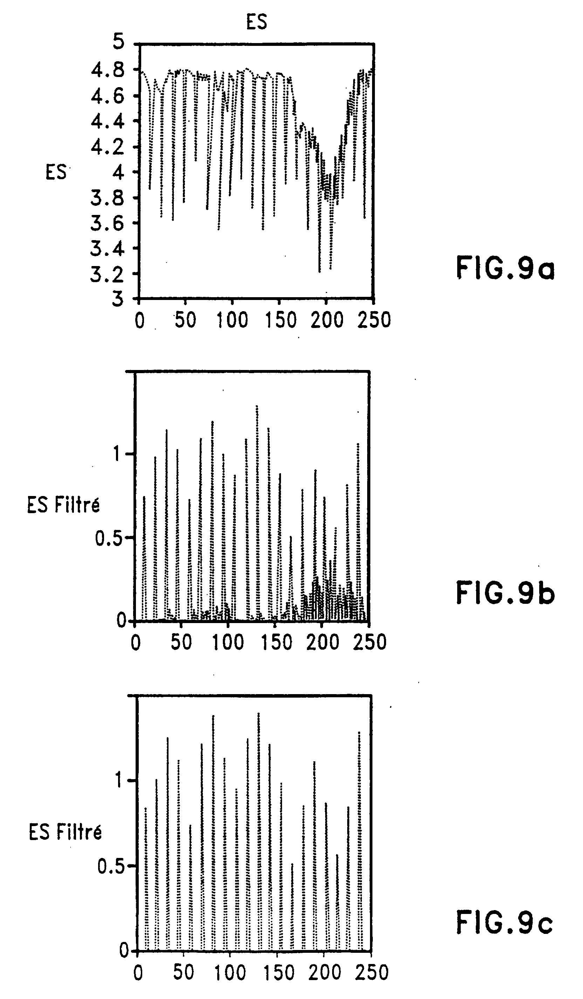

Les images de type "I" donnent un minimum local net dans le temps sur un paramètre tel que AM ou ES (voir figure N° 4). En raison du mode de codage sans prédiction des images "I", ces dernières sont en effet temporellement marquées par rapport aux autres images. C'est le cas pour des séquences à faible activité temporelle ou qui présentent des changements restreints de contenu. Un exemple représentatif est le début de la séquence de la figure 9a, images [0,150].

Toutefois, les valeurs du paramètre AM ou ES sont liées au mode de codage de l'image (I,P,B) mais aussi au contenu de l'image, étant donné sa définition (voir ci-dessus). Ainsi, un important mouvement est présent dans la seconde partie de la séquence de la figure 9a, vers l'intervalle d'images [170,220]. Cela se traduit visuellement par une image moins détaillée. Les coefficients de la transformée TCD représentant des fréquences spatiales élevées sont moins présents : l'énergie de l'image est donc en moyenne plus compactée vers les basses fréquences, d'où une baisse des valeurs de ES(t) dans l'intervalle des images concernées. Par conséquent, dans cette séquence, une baisse globale des valeurs de ES(t) est constatée pour les images "I". La présence des minimas locaux temporels discriminants pour les images "I" est conservée. L'identification correcte des images passe de préférence par un traitement sur AM(t) ou ES(t) pour extraire ces minimas locaux.

Afin de séparer au mieux l'influence du contenu de la séquence et l'information recherchée, un filtrage passe-haut peut être alors effectué (figure 9b). En effet, les minimas locaux sur ES(t) durent le temps d'une image, c'est-à-dire un point sur l'axe des temps, alors que l'évolution du contenu à l'intérieur d'une séquence est plus lente.

Pour l'opération de filtrage passe-haut, chaque point $ES_{filtré}(t)$ est obtenu par calcul du plus petit écart positif entre ES(t) pour une image donnée et ses deux voisines (pour l'image précédente et pour l'image suivante)

$$ES_{filtré}(t) = \max\left[\min(0, ES(t) - ES(t-1)), \min(0, ES(t) - ES(t+1))\right]$$

A ce point du traitement, toutes les variations de courte durée sur les valeurs de ES(t) sont extraites (figure 9b). Il est cependant possible qu'il n'y ait pas de pics marqués de cette fonction. Cela correspond au cas où les groupes d'images ne sont composés que d'images "I": les minimas locaux de ES(t) ne sont plus discernables, ce qui donne une réponse quasi constante pour $ES(t)_{filtré}$. Cette hypothèse est examinée avant d'engager d'autres traitements par le test :

$$EcartType_k(ES(t)_{filtré}) < SeuilES_1$$

On considère ainsi que les fluctuations de $ES_{filtré}(t)$ sont négligeables lorsque l'écart-type de $ES_{filtré}(t)$ sur les K dernières images est inférieur à un seuil donné. Une conclusion possible est que tous les groupes de la séquence des K images, sont composés uniquement d'images de type "I". La valeur de K peut être fixée à une valeur donnée, par exemple la longueur maximale du groupe d'images GOP fixée à partir de recommandations MPEG2 par exemple.

Dans le cas où la condition précédente n'est pas remplie, on considère qu'il existe des maximas locaux pour $ES_{filtré}(t)$. Par conséquent, ce constat implique que le groupe d'images est composé d'images "I" et d'autres types d'images.

Afin d'isoler les images de type "I", un seuillage adaptatif est effectué sur $ES_{filtré}(t)$. En effet, comme la valeur de ES(t) dépend du contenu de l'image, celle de $ES_{filtré}(t)$ en dépend également. Pour tenir compte de cette réalité, un seuil arbitrairement fixé ne peut assurer la discrimination attendue pour la détection des maximas locaux de $ES_{filtré}(t)$. La valeur de ce seuil est adaptative, en fonction de la valeur du paramètre $ES_{filtré}(t)$ à l'image "I" précédente, par exemple :

$$SeuilES_2(t_i) = [ES_{filtré}(t_{i\ précédente})] / 2$$

Pour la détection de la première image de type "I", la valeur de seuil choisie est égale au maximum de $ES_{filtré}(t)$ trouvée sur quelques images (par exemple K=16 ici). La valeur de K doit être choisie de telle sorte qu'il y ait au moins une image "I" dans cette durée.

$$SeuilES_2(t_{première\ image\ i}) = \max_k (ES_{filtré}(t) / 2$$

Les valeurs de $ES_{filtré}$ inférieures au seuil $SeuilES_2(t_i)$ sont forcées à zéro, et les autres sont maintenues. Les pics correspondant aux images de type "I" apparaissant nettement par comptage des valeurs nulles, on trouve la taille du groupe d'images GOP. Dans l'exemple de la figure 9c, le nombre n d'images dans les groupes d'images GOP est égal à 12.

La détection des images de type "I" peut être effectuée de la manière suivante :

a) acquisition de l'image à l'instant t,

b) synchronisation spatiale,

c) calcul de ES(t),

d) filtrage passe-haut de l'historique de ES(t) sur K images à partir de la première image de type "I",

e) si écartType$_k$(ES(t)$_{filtré}$) < SeuilES$_1$, toutes les images sont de type "I" (il n'y a pas d'image prédite temporellement "P et B"),

sinon :

f) modification du seuil adaptatif :

$$\text{SeuilES}_2(t_I) = [\text{ES}_{filtré}(t_{I\ précédente})]/2$$

g) si ES$_{filtré}$ est supérieur au seuil SeuilES$_2$(t$_i$), cette image est une image "I",

h) la taille du groupe d'images est donnée par la distance entre les deux images de type "I" successives.

Après détection des images de type "I", il est possible de détecter les images "P".

Afin de reconnaître les différents types d'images, la présente invention se propose dans un premier temps d'identifier la référence du groupe d'images GOP. En effet, les images de type "I" peuvent être considérées comme telles, puisqu'elles se distinguent des autres par les algorithmes de compression qui leur sont appliqués. Une fois cette opération réalisée, il est possible de détecter les autres catégories d'images.

Pour détecter les images de type "I" signalées dans le groupe d'images GOP, les minima de forte amplitude de ES(t) ont été utilisés. Pour identifier les images "P", une propriété avantageuse est mise à profit. En effet, ces images produisent des maxima locaux sur le paramètre ES, mais ces maxima sont plus marqués avec le paramètre traduisant l'activité spatiale AM des images avec AM = $\bar{a}$ sb, par rapport aux images "B".

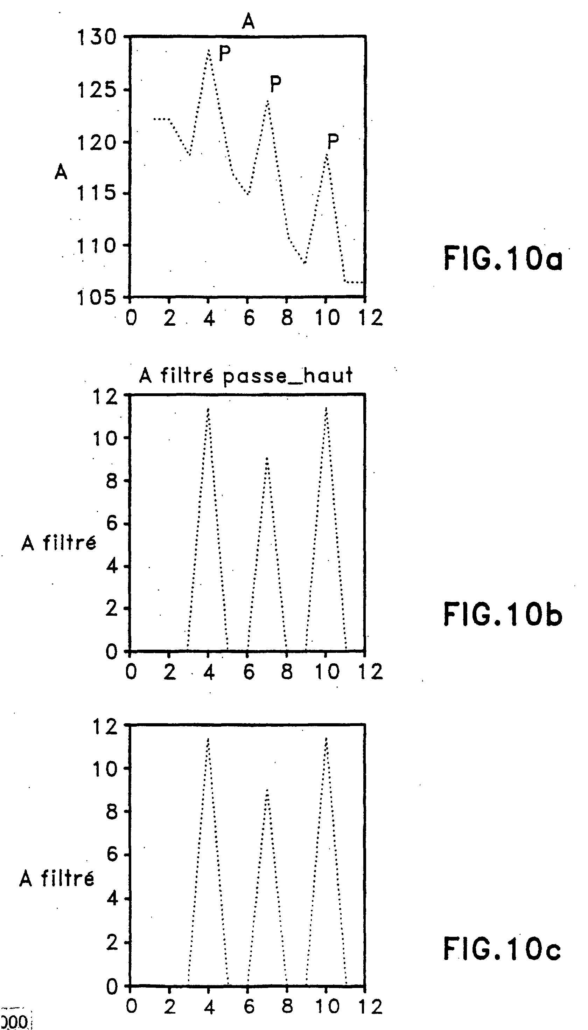

Dans un premier lieu, l'indicateur spatial des images AM(t) est calculé pour toute la séquence vidéo. Sachant que la position des images de type "I" est maintenant connue, une analyse du groupe d'images privé des images "I" peut être effectuée. Ceci se traduit par le remplacement des valeurs AM(t) correspondant à des images de type "I" par la valeur correspondant à celle de l'image qui la précède (figure 10a). La méthode suivie est similaire à la précédente.

$$\text{AM}_{filtré}(t) = \min[\max(0, \text{AM}(t) - \text{AM}(t-1)), \max(0, \text{AM}(t) - \text{AM}(t+1))]$$

Après filtrage passe-haut, le signal est représenté à la figure 10b.

De même que pour le repérage des images de type "I", un seuillage adaptatif donne la position des images de type "P", dans le cas où il existe des images de type "B".

L'hypothèse de l'absence d'images "B" est testée par

$$\text{écartType}(\text{AM}_{filtré}) < \text{SeuilA}_I$$

Dans le cas contraire, l'application de l'opération de seuillage permet de trouver la position des images de type "P" et par conséquent la distance entre deux images de ce type :

$$\text{SeuilA}_2(t_{première\ image\ P}) = \max_k(\text{AM}_{filtré}(t))/2$$

$$\text{SeuilA}_2(t_P) = [\text{AM}_{filtré}(t_{P\ précédente})]/2$$

Le résultat de la détection des images "P" est illustré à la figure 10c.

La détection des images de type "P" peut être effectuée de la manière suivante :

a) acquisition de l'image à l'instant t,

b) synchronisation spatiale,

c) calcul de AM(t),

d) filtrage passe-haut de l'historique de AM(t) depuis la dernière image de type "I",

e) si écartType(AM$_{filtré}$) < SeuilA$_I$, toutes les images sont de type "P" (il n'y a pas d'image bidirectionnelle prédite "B"),

     sinon :

f) rafraîchir le seuil adaptatif :

$$SeuilA_2(t_p) = [AM_{filtré}(t_{p\ précédente})]/2$$

g) si AM$_{filtré}$ est supérieur au seuil SeuilA$_2$(t$_p$), les images correspondantes sont des images de type "P".

On notera qu'il est également possible de retrouver les images de type "P" à partir des maxima de la fonction ES (voir par exemple la courbe de la figure 4), mais on notera que cette fonction ES est moins discriminante que la fonction AM.

La présente invention propose également un procédé de reconnaissance de la structure des groupes d'images telle qu'elle a été définie par les recommandations MPEG2.

Cette identification de la syntaxe des groupes d'images peut être par exemple effectuée de la manière suivante :

a) acquisition de l'image à l'instant t,

b) synchronisation spatiale,

c) identification de la position des images "I" dans le groupe d'images GOP,

d) détection des images de type "P",

e) proposition de la structure finale du GOP : position et distance entre les images de type "I", "P" et "B", et des valeurs de n et de m.

La présente invention présente un champ d'application étendu.

Dans plusieurs applications dans lesquelles des séquences numériques sont codées par les techniques recommandées de réduction de débit, il est nécessaire d'effectuer des synchronisations spatiales et/ou temporelles par rapport à une vidéo numérique codée de référence. Comme exemples peuvent être cités ici des applications de mise en cascade de codeurs ou certaines méthodes automatiques d'évaluation de la qualité d'image.

En effet, dans le premier cas de figure, la synchronisation apporte une optimisation des performances de l'opération en terme de qualité finale des signaux vidéo codés et restitués en fin de chaîne. L'absence de synchronisation peut mettre en échec la mise en cascade par la dégradation définitive et non acceptable par les utilisateurs de la qualité des signaux codés et décodés.

Pour la seconde application, certaines méthodes d'évaluation nécessitent le calcul d'un signal d'erreur issu du calcul de la différence entre deux signaux : le signal original codé et diffusé en début d'une chaîne de transmission, et le signal dégradé obtenu en fin de chaîne. Dans ce cas là encore, la réalisation de la synchronisation permet d'assurer un calcul efficace du signal d'erreur.

Dans le présent mémoire, ont été décrites des procédures de synchronisation spatiale et temporelle. Elles se déclinent suivant une méthode spatiale applicable pour le re-cadrage de l'image au pixel près et/ou un procédé de correction du déphasage horizontal d'un sous-pixel.

La méthode temporelle est utilisée pour identifier la structure du groupe d'images tel qu'il a été défini par la normalisation MPEG2. Cette méthode permet de détecter les images de type "I", "P" et "B". De cette manière, la syntaxe des groupes d'images GOP est déterminée. Le procédé selon l'invention présente une grande robustesse aux bruits et aux variations du contenu de l'image. Il démontre, par conséquent, une grande efficacité pour l'analyse des données utilisées par les techniques de codage. Il trouve son application dans des équipements manipulant des données d'images numériques et codées.

En particulier, il permet d'effectuer une mise en cascade des équipements, une synchronisation spatiale au pixel près ou à une fraction de pixel près étant mise en oeuvre entre chaque opération de la mise en cascade.

L'invention peut être mise en oeuvre à l'aide d'une transformée linéaire et orthogonale. Outre les exemples déjà cités, cette transformée peut être une transformée en sinus discrète, une transformée de Haar, une transformée de Hadamar ou bien encore une transformée de Slant.

**Revendications**

1. Procédé de synchronisation de la position spatiale d'une image vidéo pour retrouver la position d'une grille initiale de codage numérique, par blocs de codage de ladite image, **caractérisé en ce qu'**il met en oeuvre les étapes suivantes :

   a) déplacer selon la direction des lignes de l'image et/ou selon la direction perpendiculaire aux lignes de l'image, une grille d'analyse GA constituée de dits blocs de codage et correspondant à au moins une partie de l'image ;
   b) déterminer à chaque position de la grille d'analyse GA, les coefficients transformés Fu,v de chaque bloc de la grille d'analyse GA, par une transformée par blocs ; et calculer pour chaque position de la grille d'analyse GA et à partir des coefficients transformés Fu,v, un paramètre d'activité représentatif de l'activité spatiale de l'image ;
   c) déterminer la position de la grille d'analyse GA pour laquelle ledit paramètre d'activité représente une activité minimale et valider ladite position en tant que position de synchronisation.

2. Procédé selon la revendication 1, **caractérisé en ce que** ledit paramètre d'activité est la moyenne AM des activités asb des blocs de la grille d'analyse, l'activité asb d'un bloc étant définie comme étant une combinaison éventuellement pondérée des valeurs absolues des coefficients transformés Fu,v, par ladite transformée par blocs avec $(u,v) \neq (0,0)$, selon la formule suivante :

$$asb = \sum_{(u,v) \neq (0,0)} |k(u,v).F(u,v)|^p$$

k(u,v) est un coefficient de pondération de la composante utilisée, et p une constante.

3. Procédé selon la revendication 1 **caractérisé en ce que** ledit paramètre d'activité est la moyenne ES des entropies spectrales esb des blocs de la grille d'analyse
   avec :

$$ES = \bar{e}sb,$$

$$esb = - \sum_{(u,v) \neq (0,0)} k(u,v).p(u,v)\log_2\left[\left(p(u,v)\right)\right]$$

   avec

$$asb = \sum_{(u,v) \neq (0,0)} |k(u,v).F(u,v)|^p$$

   et

$$p(u,v) = \frac{|F(u,v)|^p}{asb}$$

k(u,v) est un coefficient de pondération de la composante utilisée, et p une constante.

4. Procédé selon la revendication 3 **caractérisé en ce que** :

$$esb = - \sum_{(u,v) \neq (0,0)} p(u,v)\log_2\left[\left(p(u,v)\right)\right],$$

où

$$p(u,v) = \frac{|F(u,v)|}{asb}$$

et

$$asb = \sum_{(u,v)=(0,0)} |F(u,v)|$$

F(u,v) désignant les coefficients transformés d'un seul bloc, par ladite transformée par blocs.

**5.** Procédé selon une des revendications précédentes, **caractérisé en ce que** ledit déplacement de la grille d'analyse s'effectue par pas égaux à une distance inter-pixels ou à un multiple de celle-ci.

**6.** Procédé selon une des revendications 1 à 4, **caractérisé en ce que** ledit déplacement de la grille d'analyse s'effectue par pas inférieurs à une distance inter-pixels.

**7.** Procédé selon une des revendications précédentes, **caractérisé en ce que** ladite position n'est validée à l'étape c que si ladite activité minimale que représente ledit paramètre d'activité est supérieure à un seuil donné A.

**8.** Procédé selon une des revendications précédentes, **caractérisé en ce qu'**il comporte, avant l'étape a, une étape de conversion analogique-numérique à l'aide d'un convertisseur présentant une horloge d'échantillonnage pour échantillonner des signaux d'images, et **en ce qu'**il comporte, après l'étape c :

- une étape d de décalage dX de la grille d'analyse dans le sens des lignes de l'image, en modifiant d'au moins un incrément dφ la phase d'échantillonnage des signaux d'image ;
- une étape e de détermination, pour au moins une position décalée dX de la grille d'analyse, définie lors de l'étape d, desdits coefficients transformés Fu,v et dudit paramètre représentatif de l'activité de l'image.

**9.** Procédé selon la revendication 8, **caractérisé en ce que** lors de l'étape d, on réalise une scrutation dite sub-pixel en décalant la grille d'analyse selon une pluralité de dites positions décalées de la grille d'analyse, qui sont obtenues en modifiant par incréments dφ la phase d'échantillonnage, **en ce que**, lors de l'étape e, on détermine, pour chacune des positions décalées, lesdits coefficients transformés Fu,v et ledit paramètre d'activité représentatif de l'activité de l'image, et **en ce qu'**il comporte une étape f de détermination de la position dite sub-pixel $(d\varphi_o, dX_o)$ de la grille d'analyse pour laquelle ledit paramètre d'activité représente une valeur minimale de l'activité.

**10.** Procédé selon une des revendications 8 ou 9, **caractérisé en ce qu'**il comporte, après l'étape e, une étape g de détermination dudit paramètre d'activité selon deux dites positions décalées, dont l'une est une position dite avancée (dX+Δ) et l'autre est une position dite retardée (dX-Δ).

**11.** Procédé selon la revendication 10, **caractérisé en ce qu'**il comporte après l'étape g, une étape h de détermination pour chacune des positions, avancée (dX+Δ) et retardée (dX-Δ), de la moyenne du paramètre d'activité sur M images.

**12.** Procédé selon la revendication 11, **caractérisé en ce qu'**il met en oeuvre un pilotage de la contre-réaction sur la phase φ de l'échantillonnage à partir d'un signal d'erreur qui est la différence entre ladite moyenne du paramètre d'activité pour la position retardée (dX-Δ) et ladite moyenne du paramètre d'activité pour la position avancée (dX+Δ).

**13.** Procédé selon la revendication 12, **caractérisé en ce que** ledit paramètre d'activité est l'entropie spectrale et **en ce que** ledit signal d'erreur est normalisé par l'entropie spectrale moyenne ES d'au moins une zone de l'image.

**14.** Procédé selon une des revendications précédentes, **caractérisé en ce qu'**il comporte une étape de détermination, dans une séquence d'images synchronisées spatialement, des images présentant les valeurs les plus faibles de l'activité représentée par ledit paramètre d'activité, ces images étant de ce fait identifiées comme étant du type codées sans prédiction I.

**15.** Procédé selon une des revendications précédentes, **caractérisé en ce qu'**il comporte une étape de détermination, dans une séquence d'images, des images présentant pour un paramètre d'activité, de préférence l'activité moyenne AM, d'au moins une zone des images de ladite séquence, des valeurs correspondant à l'activité la plus élevée, ces images étant de ce fait identifiées comme étant du type P.

**16.** Procédé selon les revendications 14 et 15, **caractérisé en ce qu'**il comporte une étape de caractérisation de la syntaxe du groupe d'images (GOP).

**17.** Procédé selon les revendications 14 à 16, **caractérisé en ce qu'**une dite détermination s'effectue après filtrage passe-haut du signal représentatif du paramètre d'activité des images de ladite séquence d'image, de manière à éliminer au moins partiellement l'évolution du contenu des images à l'intérieur de la séquence.

**18.** Procédé selon la revendication 17, **caractérisé en ce que** ledit filtrage passe-haut consiste à calculer chaque point du signal filtré par calcul du plus petit écart positif entre un point correspondant du signal non filtré et les points voisins correspondant à l'image précédente et à l'image suivante.

**19.** Procédé selon une des revendications précédentes **caractérisé en ce que** ladite transformée par blocs est une transformée linéaire et orthogonale.

**Claims**

**1.** Method for synchronization of the spatial position of a video image in order to recover the position of an initial grid for digital coding of the said image by coding blocks, **characterized in that** it implements the following stages:

> a) shifting, along the direction of the lines of the image and/or along the direction perpendicular to the lines of the image, an analysis grid GA consisting of said coding blocks and corresponding to at least one part of the image;
> b) determining, at each position of the analysis grid GA, the transformed coefficients Fu,v of each block of the analysis grid GA, via a block transform, and, for each position of the analysis grid GA and on the basis of the transformed coefficients Fu,v, calculating an activity parameter representative of the spatial activity of the image;
> c) determining the position of the analysis grid GA for which the said activity parameter represents minimal activity, and ratifying the said position as synchronization position.

**2.** Method according to Claim 1, **characterized in that** the said activity parameter is the average AM of the activities asb of the blocks of the analysis grid, the activity asb of a block being defined as being the combination, possibly weighted, of the absolute values of the coefficients Fu,v, transformed by the said block transform, with $(u,v) \neq (0,0)$, according to the following formula:

$$asb = \sum_{(u,v) \neq (0,0)} \left| k(u,v).F(u,v) \right|^{p}$$

k(u,v) is a coefficient for weighting the component used, and p a constant.

**3.** Method according to Claim 1, **characterized in that** the said activity parameter is the average ES of the spectral entropies esb of the blocks of the analysis grid     with:

$$ES = \bar{e}sb,$$

$$esb = - \sum_{(u,v) \neq (0,0)} k(u,v).p(u,v)\log_{2}\left[ (p(u,v)) \right]$$

with

$$asb = \sum_{(u,v)\neq(0,0)} \left|k(u,v).F(u,v)\right|^{p}$$

and

$$p(u,v) = \frac{|F(u,v)|^{p}}{asb}$$

k(u,v) is a coefficient for weighting the component used, and p a constant.

4. Method according to Claim 3, **characterized in that**:

$$esb = - \sum_{(u,v)\neq(0,0)} p(u,v)\log_{2}\left[(p(u,v))\right],$$

in which

$$p(u,v) = \frac{|F(u,v)|}{asb}$$

and

$$asb = \sum_{(u,v)\neq(0,0)} \left|F(u,v)\right|$$

F(u,v) designating the coefficients of a single block transformed by the said block transform.

5. Method according to one of the preceding claims, **characterized in that** the said shifting of the analysis grid is carried out in steps equal to an inter-pixel distance or to a multiple thereof.

6. Method according to one of Claims 1 to 4, **characterized in that** the said shifting of the analysis grid takes place in steps less than an inter-pixel distance.

7. Method according to one of the preceding claims, **characterized in that** the said position is ratified at stage c only if the said minimal activity which the said activity parameter represents is higher than a given threshold A.

8. Method according to one of the preceding claims, **characterized in that** it includes, before stage a, a stage of analog-digital conversion using a converter exhibiting a sampling clock in order to sample image signals, and **in that** it includes, after stage c:

   - a stage d of shifting dX of the analysis grid in the direction of the lines of the image, modifying by at least one increment dφ the sampling phase of the image signals;
   - a stage e of determination, for at least one shifted position dX of the analysis grid, defined during stage d, of the said transformed coefficients Fu,v and of the said parameter representative of the activity of the image.

9. Method according to Claim 8, **characterized in that**, during stage d, said sub-pixel is examined by shifting the analysis grid along a plurality of said shifted positions of the analysis grid which are obtained by altering the sampling phase in $d\varphi$ increments, **in that**, during stage e, there is determined, for each of the shifted positions, the said transformed coefficients Fu,v and the said activity parameter representative of the activity of the image, and **in that** it includes a stage f for determination of the position of said sub-pixel ($d\varphi_O$, $dX_O$) of the analysis grid for which the said activity parameter represents a minimum value of the activity.

10. Method according to either of Claims 8 and 9, **characterized in that** it includes, after stage e, a stage g of determining the said activity parameter according to two said shifted positions, one of which is a position called advanced position ($dX+\Delta$) and the other is a position called retarded position ($dX-\Delta$).

11. Method according to Claim 10, **characterized in that** it includes, after stage g, a stage h of determining the average of the activity parameter over M images, for each of the advanced ($dX+\Delta$) and retarded ($dX-\Delta$) positions.

12. Method according to Claim 11, **characterized in that** it employs control of the feedback on the phase $\varphi$ of the sampling, on the basis of an error signal which is the difference between the said average of the activity parameter for the retarded position ($dX-\Delta$) and the said average of the activity parameter for the advanced position ($dX+\Delta$).

13. Method according to Claim 12, **characterized in that** the said activity parameter is the spectral entropy and **in that** the said error signal is normalized by the average spectral entropy ES of at least one area of the image.

14. Method according to one of the preceding claims, **characterized in that** it includes a stage of determining, in a sequence of spatially synchronized images, the images exhibiting the lowest values of the activity represented by the said activity parameter, these images thereby being identified as being of the I type coded without prediction.

15. Method according to one of the preceding claims, **characterized in that** it includes a stage of determining, in a sequence of images, images exhibiting, for an activity parameter, preferably the average activity AM, of at least one area of the images of the said sequence, values corresponding to the highest activity, these images thereby being identified as being of the P type.

16. Method according to Claims 14 and 15, **characterized in that** it includes a stage of characterizing the syntax of the group of images (GOP).

17. Method according to Claims 14 to 16, **characterized in that** a said determination is carried out after high-pass filtering of the signal representative of the activity parameter of the images of the said image sequence, in such a way as at least partially to eliminate the change in the content of the images within the sequence.

18. Method according to Claim 17, **characterized in that** the said high-pass filtering consists in calculating each point of the filtered signal by calculating the smallest positive offset between a corresponding point of the unfiltered signal and the adjacent points corresponding to the preceding image and to the next image.

19. Method according to one of the preceding claims, **characterized in that** the said block transform is a linear and orthogonal transform.

**Patentansprüche**

1. Verfahren zur Synchronisation der räumlichen Position eines Videobildes, um die Position eines vorgespeicherten digitalen Codiergitters je nach den Codierblöcken dieses Bildes wieder aufzufinden, **dadurch gekennzeichnet, dass**

   a) in Richtung der Bildzeilen und/oder in senkrechter Richtung zu den Bildzeilen ein GA-Analysegitter verschoben wird, das aus diesen Codierblöcken besteht und mindestens einem Teil des Bildes entspricht;
   b) in jeder Position des GA-Analysegitters die umgewandelten Koeffizienten Fu,v der einzelnen Blöcke des GA-Analysegitters mit Hilfe einer Transformierten pro Block bestimmt werden; und für jede Position des GA-Analysegitters und auf der Grundlage der umgeformten Koeffizienten Fu,v ein Aktivitätsparameter berechnet wird, der für die räumliche Aktivität des Bildes repräsentativ ist;
   c) die Position des GA-Analysegitters bestimmt wird, in der dieser Aktivitätsparameter eine minimale Aktivität repräsentiert, und diese Position als Position der Synchronisation validiert wird.

**2.** Verfahren nach Anspruch 1,
**dadurch gekennzeichnet, dass**
dieser Aktivitätsparameter der Mittelwert AM der Aktivitäten asb der Blöcke des Analysegitters ist, wobei diese Aktivität asb eines Blockes als eine eventuell gewichtete Kombination der absoluten Werte der mit Hilfe der Transformierten pro Block mit (u,v) = (0,0) umgeformten Koeffizienten entsprechend der folgenden Formel definiert wird:

$$asb = \sum_{(u,v)=(0,0)} |k(u,v).F(u,v)|^p$$

darin ist k(u,v) ein Koeffizient für die Gewichtung der verwendeten Komponente, und p ist eine Konstante.

**3.** Verfahren nach Anspruch 1,
**dadurch gekennzeichnet, dass**
dies Aktivitätsparameter der Mittelwert ES der spektralen Entropien esb der Blöcke des Analysegitters ist,
mit:

$$ES = \overline{esb}$$

$$esb = - \sum_{(u,v)=(0,0)} k(u,v).p(u,v)\log_2[(p(u,v))]$$

*mit*

$$asb = \sum_{(u,v)=(0,0)} |k(u,v).F(u,v)|^p$$

und

$$p(u,v) = \frac{|F(u,v)|^p}{asb}$$

darin ist k(u,v) ein Koeffizient der verwendeten Komponente und p ist eine Konstante.

**4.** Verfahren nach Anspruch 3,
**dadurch gekennzeichnet, dass**

$$esb = - \sum_{(u,v)=(0,0)} p(u,v)\log_2[(p(u,v))],$$

darin ist

$$p(u,v) = \frac{|F(u,v)|}{asb}$$

und

$$asb = \sum_{(u,v)=(0,0)} F(u,v) \rfloor$$

darin bezeichnet F(u,v) die mit Hilfe der Transformierten pro Block umgeformten Koeffizienten eines einzelnen Blockes.

5. Verfahren nach einem der vorausgegangenen Ansprüche,
**dadurch gekennzeichnet, dass**
diese Verschiebung des Analysegitters in gleichmäßigen Schritten in einem Abstand zwischen Pixeln oder in einem Vielfachen dieses Abstands erfolgt.

6. Verfahren nach einem der Ansprüche 1 bis 4,
**dadurch gekennzeichnet, dass**
die Verschiebung des Analysegitters in Schritten erfolgt, die kleiner sind, als der Abstand zwischen den Pixeln.

7. Verfahren nach einem der vorausgegangenen Ansprüche,
**dadurch gekennzeichnet, dass**
diese Position erst dann in der Etappe c validiert wird, wenn diese durch den Aktivitätsparameter repräsentierte minimale Aktivität über einem bestimmten Schwellenwert A liegt.

8. Verfahren nach einem der vorausgegangenen Ansprüche,
**dadurch gekennzeichnet, dass**
vor der Etappe a eine Etappe der analog-digitalen Konversion mit Hilfe eines Umsetzers durchgeführt wird, der einen Impulsgeber für die Probennahme enthält, um Muster der Bildsignale zu sammeln, und dass nach der Etappe c:

- eine Etappe d der Verschiebung dX des Analysegitters in Richtung der Bildzeilen dadurch durchgeführt wird, dass die Phase der Probenentnahme der Bildsignale um mindestens ein Inkrement $d\varphi$ verändert wird;
- eine Etappe e für die Bestimmung von mindestens einer in der Etappe d definierten versetzten Position dX des Analysegitters dieser umgeformten Koeffizienten Fu,v und des für die Aktivität des Bildes repräsentativen Parameters durchgeführt wird.

9. Verfahren nach Anspruch 8,
**dadurch gekennzeichnet, dass**
während der Etappe d eine Abfrage der sogenannten Subpixel dadurch durchgeführt wird, dass das Analysegitter in einer Vielzahl der versetzten Positionen des Analysegitters verschoben wird, die dadurch erreicht werden, dass die Phase der Probenentnahme in Inkrementen $d\varphi$ verändert wird, und dass während der Phase e für die einzelnen versetzten Positionen die umgeformten Koeffizienten Fu,v und der für die Aktivität des Bildes repräsentative Aktivitätsparameter bestimmt werden, und dadurch, dass eine Etappe f für die Bestimmung der Position der sogenannten Subpixel $(d\varphi_o, dX_o)$ des Analysegitters durchgeführt wird, für welche dieser Aktivitätsparameter einen minimalen Wert der Aktivität repräsentiert.

10. Verfahren nach einem der Ansprüche 8 oder 9,
**dadurch gekennzeichnet, dass**
nach der Etappe e eine Etappe g für die Bestimmung dieses Aktivitätsparameters in den beiden sogenannten versetzten Positionen durchgeführt wird, von denen die eine eine sogenannte vorgezogene Position $(dX+\Delta)$ und die andere eine sogenannte nacheilende Position $(dX\Delta)$ darstellt.

11. Verfahren nach Anspruch 10,
**dadurch gekennzeichnet, dass**
nach der Etappe g eine Etappe h für die Bestimmung der einzelnen Positionen, das heißt, der vorgezogenen Position $(dX+\Delta)$ und der nacheilenden Position $(dX-\Delta)$ des Mittelwertes des Aktivitätsparameters auf M Bildern durchgeführt wird.

12. Verfahren nach Anspruch 11,
**dadurch gekennzeichnet, dass**

eine Steuerung der Gegenreaktion in der Phase φ der Probenentnahme aufgrund eines Fehlersignals durchgeführt wird, welche den Unterschied zwischen diesem Mittelwert des Aktivitätsparameters für die nacheilende Position (dX+Δ) und dem Mittelwert des Aktivitätsparameters der vorgezogenen Position (dX+Δ) bildet.

13. Verfahren nach Anspruch 12,
**dadurch gekennzeichnet, dass**
dieser Aktivitätsparameter die spektrale Entropie ist, und dass dieses Fehlersignal durch die mittlere spektrale Entropie ES von mindestens einem Bildbereich normalisiert wird.

14. Verfahren nach einem der vorausgegangenen Ansprüche,
**dadurch gekennzeichnet, dass**
eine Etappe für die Bestimmung der Bilder in einer räumlich synchronisierten Bildsequenz durchgeführt wird, welche die geringsten Werte der Aktivität zeigen, die durch diesen Aktivitätsparameter repräsentiert werden, so dass diese Bilder als ein codierter Typ ohne eine Voraussage I identifiziert werden können.

15. Verfahren nach einem der vorausgegangenen Ansprüche,
**dadurch gekennzeichnet, dass**
in einer Bildsequenz eine Etappe für die Bestimmung der Bilder vorgesehen ist, die für einen Aktivitätsparameter vorzugsweise die mittlere Aktivität AM von mindestens einem Bildbereich dieser Sequenz Werte darstellt, welche der höchsten Aktivität entsprechen, so dass diese Bilder als Typ P identifiziert werden können.

16. Verfahren nach einem der Ansprüche 14 und 15,
**dadurch gekennzeichnet, dass**
eine Etappe für die Charakterisierung der Syntax der Bildgruppe (GOP) vorgesehen ist.

17. Verfahren nach einem der Ansprüche 14 und 15,
**dadurch gekennzeichnet, dass**
die sogenannte Bestimmung nach einer Hochpassfilterung des Signals durchgeführt wird, welche den Aktivitätsparameter dieser Bildsequenz repräsentiert, um mindestens teilweise die Entwicklung des Bildinhaltes innerhalb dieser Sequenz auszuschalten.

18. Verfahren nach Anspruch 17,
**dadurch gekennzeichnet, dass**
diese Hochpassfilterung darin besteht, dass die einzelnen Punkte des gefilterten Signals durch Berechnung der geringsten positiven Abweichung zwischen einem Punkt, welcher dem nicht gefilterten Signal und den benachbarten Punkten entspricht, die dem vorausgegangenen Bild und dem nächsten Bild entspricht, durchgeführt wird.

19. Verfahren nach einem der vorausgegangenen Ansprüche,
**dadurch gekennzeichnet, dass**
diese Transformierte pro Block eine lineare und eine orthogonale Transformierte ist.

GI

IM

GI n,m

ZI  GA n,m

GA

**FIG.1**

N

N

I B B P B B P B B P B B I

m=3

n=12

**FIG.2**

**FIG.3**

**FIG.4**

**FIG.5**

**FIG.6**

**FIG.7**

**FIG.8a**

**FIG.8b**

ES

**FIG.9a**

ES Filtré

**FIG.9b**

ES Filtré

**FIG.9c**

FIG.10a

FIG.10b

FIG.10c